# EUROPÄISCHE PATENTSCHRIFT

(11) **EP 1 373 961 B1**
(45) Veröffentlichungstag und Bekanntmachung des Hinweises auf die Patenterteilung: **04.01.2006**
(21) Anmeldenummer: 02787138.3
(22) Anmeldetag: 19.07.2002
(51) Int. Cl.: G02B 21/02, G02B 21/36

(54) **MIKROSKOPOBJEKTIVANORDNUNG**
MICROSCOPE LENS ARRANGEMENT
ENSEMBLE OBJECTIF DE MICROSCOPE

(30) Priorität: 19.07.2001 DE 10135321
(43) Veröffentlichungstag der Anmeldung: 02.01.2004
(73) Patentinhaber: Carl Zeiss SMS GmbH, 07745 Jena (DE)
(72) Erfinder: ENGEL, Thomas, 99102 Erfurt (DE)
(74) Vertreter: Grimm, Christian
(86) Internationale Anmeldenummer: PCT/EP2002/008100
(87) Internationale Veröffentlichungsnummer: WO 2003/009043

(56) Entgegenhaltungen:
- EP-A- 0 164 875
- DE-A- 19 837 152
- US-A- 4 621 283

## Beschreibung

Die Erfindung bezieht sich auf ein System mit einen Mikroskop zur Untersuchung einer Probe gemäß dem Oberbegriff des Anspruchs 1 und ein Verfahren zur Untersuchung einer Probe gemäß dem Oberbegriff des Anspruchs 16.

Ein Mikroskop eines solches Systems weist üblicherweise mehrere Mikroskopobjektive auf, die alle mit einem Objektivrevolver des Mikroskops verbunden sind; mit dem das gewünschte Mikroskopobjektiv in Arbeitsstellung gebracht werden kann. Da bei mikroskopischen Untersuchungen der Beobachtungsort auf der Probe festzulegen bzw. zu kontrollieren ist, weisen die Mikroskopobjektive unterschiedliche Vergrößerungsfaktoren auf, so daß vor einer hochvergrößerenden Beobachtung zuerst mittels eines Mikroskopobjektivs mit geringerer Vergrößerung festgestellt wird, ob die Probe richtig positioniert ist. Dies ist besonders bei mikroskopischen Beobachtungen wichtig, bei denen am System kein visueller (bzw. binokularer) Einblick mehr vorhanden ist, wie dies häufig bei Mikroskopen zur Inspektion von Wafern und Masken, die zur Fertigung von Halbleitern eingesetzt werden, der Fall ist.

Eine solche Inspektion wird darüber hinaus bevorzugt mit UV-Licht (z.B. 193 nm, 157 nm) durchgeführt, während für die Übersichtsaufnahme Licht mit größerer Wellenlänge eingesetzt wird. Dazu ist eine Strahlteilung im Strahiverlauf nach dem Mikroskopobjektiv notwendig, wodurch der optische Aufbau des Mikroskops aufwendig und kompliziert wird.

Des weiteren arbeiten gangige Autofokussierungseinrichtungen bei Wellenlängen von z.B. 600-800 nm, so daß auch aus diesem Grund eine Strahlteilung in dem dem Mikroskopobjektiv nachfolgenden Strahlengang durchgeführt wird, woraus ein komplizierter optischer Aufbau resultiert.

Ausgehend hiervon ist es Aufgabe der vorliegenden Erfindung, ein System der eingangs genannten Art so weiterzubilden, daß eine Vereinfachung des optischen Aufbaus des Systems mit dem Mikroskop möglich ist.

Erfindungsgemäß wird die Aufgabe durch ein System gemäß Anspruch 1 gelöst.

Auch kann die Erfassung des Gesichtsfelds durch die Videokamera gleichzeitig mit der mikroskopischen Beobachtung über das Mikroskopobjektiv durchgeführt werden, so daß die mikroskopische Untersuchung schneller durchführbar ist, da mittels der Videokamera laufend ein Übersichtsbild aufgenommen werden kann. Das Übersichtsbild kann beispielsweise ausgewertet werden und in Abhängigkeit des Auswerteergebnisses kann der Abstand zwischen Probe und Mikroskopobjektiv (automatisch) so eingestellt werden, daß das Mikroskop auf die Probe fokussiert ist bzw. eine gewünschte Defokussierung aufweist. Erfindungsgemäß kann die Probe in Abhängigkeit des Auswerteergebnisses (automatisch) so im Gesichtsfeld positioniert werden, daß eine vorbestimmte Position der Probe mittels des Mikroskopobjektivs erfaßt und somit untersucht werden kann. Dadurch kann eine schnelle und genaue Untersuchung durchgeführt werden. Für die Positionierung kann auch ein Referenzbild eines anderen Inspektions- oder Meßsystems verwendet werden, wobei dann das Referenzbild mit dem Übersichtsbild bei der Auswertung verglichen werden kann.

Bevorzugt können zur Positionierung und gegebenenfalls zur Fokussierung z. B. Bildeigenschaften (z. B. Intensität, Kontrast) oder Bildinformationen (z. B. Konturen) ausgewertet werden und in Abhängigkeit der ausgewerteten Bildeigenschaften bzw. -konturen erfolgt dann die Positionierung und gegebenenfalls die Fokussierung.

Bevorzugt wird die erfindungsgemäße Mikroskopobjektivanordnung bei Mikroskopen (bzw. Inspektionssystemen) für die Halbleiterindustrie z. B. zur Inspektion von Wafem, Masken, Bauelementen oder Schichten oder z. B. zur Inspektion von elektronischen und/oder optischen und/oder mechanischen Bauelementen und bei Mikroskopen, die zur Untersuchung UV-Licht (z.B. 365, 266, 248, 213, 211,193,157 nm) verwenden, eingesetzt.

Die Videokamera kann derart mit dem Mikroskopobjektiv der erfindungsgemäßen Mikroskopobjektivanordnung gekoppelt sein, daß in Arbeitsstellung des Mikroskopobjektivs die räumliche Anordnung der Videokamera relativ zum Mikroskopobjektiv fixiert oder bekannt ist bzw. beibehalten wird, insbesondere wenn das Mikroskopobjektiv während der mikroskopischen Untersuchung bewegt wird (z.B. entlang der optischen Achse des Mikroskopobjektivs).

Eine solche Kopplung ist beispielsweise elektrisch derart möglich, daß die Bewegung des Mikroskopobjektivs mittels zumindest eines Sensors überwacht und die Videokamera mittels zumindest eines Stellglieds entsprechend den Signalen des Sensors bewegt wird. Es ist natürlich auch möglich, die Videokamera mechanisch mit dem Mikroskopobjektiv zu koppeln, so daß die Videokamera automatisch bzw. ohne weitere Maßnahmen in gleicher Weise wie das Mikroskopobjektiv bewegt wird.

Insbesondere kann die räumliche Anordnung der Videokamera relativ zum Mikroskopobjektiv so gewählt werden, daß die Fokusebene der Videokamera mit der Fokusebene des Mikroskops zusammenfällt. In diesem Fall ist die Fokussierung des Mikroskops besonders einfach, da das Mikroskop dann fokussiert ist, wenn auch das Bild der Videokamera scharf ist. Auch kann die Fokusebene der Videokamera zur Fokusebene des Mikroskops eine vorbestimmte Lage einnehmen (die beiden Fokusebenen können z. B. zueinander parallel sein und einen vorbestimmten Abstand voneinander aufweisen).

In einer bevorzugten Ausgestaltung der erfindungsgemäßen Mikroskopobjektivanordnung ist die Beobachtungsrichtung der Videokamera gegenüber der optischen Achse des Mikroskopobjektivs geneigt. Dadurch wird vorteilhaft erreicht, daß ein größerer Bereich als das Gesichtsfeld, durch die Videokamera erfaßbar ist, da sie schräg auf die Probe blickt. Dies ist besonders im Hinblick auf die im allgemeinen sehr geringen Arbeitsabstände (im Bereich von einigen Millimetern oder darunter) in der Mikroskopie sehr vorteilhaft, da die Videokamera von der Seite schräg auf das Gesichtsfeld des Mikroskopobjektivs blickt.

Bevorzugt umfaßt bei der erfindungsgemäßen Mikroskopobjektivanordnung die Videokamera eine Abbildungsoptik und ein dieser nachgeordnetes Bilderfassungselement, wie z.B. einen CCD-Sensor. Mit einer solchen Videokamera läßt sich der gewünschte Probenbereich mit ausreichender Auflösung leicht abbilden. Insbesondere die Verwendung eines CCD-Sensors weist noch den Vorteil auf, daß die Videokamera sehr klein und kompakt ausgebildet werden kann, wodurch in vorteilhafter Weise ihr Gewicht gering ist.

Es können aber auch andere Bilderfassungselemente, wie z.B. Photodioden, Quadrantendioden, positionsempfindliche Detektoren (PSD), verwendet werden.

Die Abbildungsoptik der Videokamera kann eine refraktive Optik sein. Es ist jedoch auch möglich, diffraktive Elemente und/oder Linsen mit örtlich variierendem Brechungsindex einzusetzen.

Insbesondere kann die Videokamera bei der erfindungsgemäßen Mikroskopobjektivanordnung noch ein Umlenkelement enthalten, wodurch es möglich ist, daß die Videokamera direkt am Mikroskopobjektiv so befestigt wird, daß ihre optische Achse parallel oder im wesentlichen parallel zur optischen Achse des Mikroskopobjektivs verläuft, und daß trotzdem eine schräge Beobachtungsrichtung auf das Gesichtsfeld sichergestellt werden kann. Dadurch ist das Mikroskopobjektiv mit der daran angebrachten Kamera nicht wesentlich größer als übliche Mikroskopobjektive, so daß die erfindungsgemäße Mikroskopobjektivanordnung problemlos in schon vorhandenen Mikroskopen einsetzbar ist.

Das Umlenkelement kann mittels eines Spiegels (der plan oder gekrümmt sein kann) oder auch mittels eines Prismas verwirklicht werden, wobei das Prisma so eingesetzt werden kann, daß es die Umlenkung nur durch Brechung, nur durch Reflexion oder mittels einer Kombination aus beidem bewirkt. Auch Gitter bzw. diffraktive Elemente sind prinzipiell als Umlenkelemente verwendbar, sowie Kombinationen aus vorgenannten Elementen auch mit Linsen.

Eine besonders bevorzugte Weiterbildung der erfindungsgemäßen Mikroskopobjektivanordnung besteht darin, daß eine eigene Lichtquelle für die Videokamera vorgesehen ist. Damit kann eine optimale Ausleuchtung des mit der Videokamera erfaßbaren Probenbereichs durchgeführt werden, wobei insbesondere auch die Wellenlänge der von der Lichtquelle abgestrahlten Strahlung beispielsweise im Hinblick auf das verwendete Bilderfassungselement optimiert werden kann.

Besonders bevorzugt ist die Lichtquelle mechanisch mit dem Mikroskopobjektiv gekoppelt, so daß sie sich, wenn sie einmal justiert ist, immer in der optimalen Stellung befindet. Dies ist insbesondere im Hinblick darauf, daß das Mikroskopobjektiv üblicherweise durch Drehung des Mikroskoprevolvers in die Arbeitsstellung gebracht wird, von besonderem Vorteil, da in diesem Fall keine zusätzlichen Maßnahmen zu ergreifen sind, um die optimale Ausleuchtung zu gewährleisten.

Weiterhin kann im optischen Strahlengang des Mikroskopobjektivs der erfindungsgemäßen Mikroskopobjektivanordnung und/oder im Strahlengang des Mikroskops ein Sperrfilter für die Strahlung der Lichtquelle angeordnet sein, so daß effektiv eine Beeinflussung oder Verschlechterung der mikroskopischen Untersuchung durch die Strahlung der Lichtquelle verhindert wird.

Eine weitere vorteilhafte Ausgestaltung der erfindungsgemäßen Mikroskopobjektivanordnung besteht darin, daß an der Außenseite des Gehäuses des Mikroskopobjektivs die Videokamera mechanisch befestigt ist. Dadurch wird gewährleistet, daß die Videokamera immer in der optimalen Position steht, wenn sie einmal justiert wurde. Dies ist insbesondere dann von Vorteil, wenn das erfindungsgemäße Mikroskopobjektiv mittels der Bewegung eines Mikroskoprevolvers in die Arbeitsstellung gebracht wird. Des weiteren läßt sich somit ein übliches Mikroskopobjektiv in einfachster Art und Weise zu dem erfindungsgemäßen Mikroskopobjektiv umrüsten, da die Videokamera nur am Gehäuse, z.B. durch Kleben, Klemmen oder Verschrauben, zu befestigen ist und keine Änderung der Optik im Mikroskopobjektiv notwendig ist.

Bevorzugt kann die mechanische Befestigung so ausgestaltet sein, daß die räumliche Beziehung von Mikroskopobjektiv und Videokamera veränderbar und fixierbar ist.

Weiterhin ist es bei der erfindungsgemäßen Mikroskopobjektivanordnung möglich, daß eine zweite Videokamera vorgesehen ist, die mit dem Mikroskopobjektiv gekoppelt ist (bevorzugt mechanisch) und die ohne Zwischenschaltung des Mikroskopobjektivs zumindest einen Teil des Gesichtsfelds erfassen kann, wenn sich das Mikroskopobjektiv in Arbeitsstellung befindet Mit der zweiten Videokamera kann in vorteilhafter Weise die Bilddarstellung sichergestellt werden, wenn beispielsweise aufgrund der speziellen Probengeometrie die erste Videokamera qualitativ schlechtere Aufnahmen liefert. Des weiteren kann eine Fokussierung leicht dadurch durchgeführt werden, daß die von beiden Videokameras aufgenommenen Bilder ausgewertet werden und in Abhängigkeit des Auswerteergebnisses der Abstand zwischen Probe und Mikroskopobjektiv so eingestellt wird, daß das Mikroskop auf die Probe fokussiert ist oder eine Defokusstellung vorbestimmte Größe (Ablage) einnimmt.

Bevorzugt überlappen sich die von beiden Videokameras erfaßten Gesichtsfeldteile zumindest teilweise, so daß ein größeres Übersichtsbild und/oder eine bessere Fokussierung ermöglicht

Insbesondere können die beiden Videokameras unterschiedliche optische Vergrößerungen aufweisen, wodurch dann unterschiedlich große Übersichtsbilder erzeugt werden können, so daß sich der Bediener leichter und schneller auf der Probe zurechtfinden kann.

Neben der Beleuchtung mit einer eigenen Lichtquelle kann auch die im Mikroskop vorgesehene Beleuchtung (z.B. Auflicht-, Durchlicht- oder Dunkelfeldbeleuchtung) eingesetzt werden, so daß in vorteilhafter Weise keine extra Lichtquelle vorzusehen ist.

Das Mikroskop des erfindungsgemäßen Systems kann eine Beobachtungsoptik aufweisen, wobei das Mikroskopobjektiv in seiner Arbeitsstellung der Beobachtungsoptik vorgeordnet ist und aus dem Gesichtsfeld kommende Strahlung in die Beobachtungsoptik weiterleitet. Dadurch wird ein System (Mikroskop + Mikroskopobjektivanordnung) zur Untersuchung bzw. Inspektion bereitgestellt, dessen Beobachtungsoptik vereinfacht sein kann, da mittels der Videokamera (und gegebenenfalls eines noch vorzusehenden Steuermoduls) eine Übersichtsaufnahme, eine Probenpositionierung und gegebenenfalls eine Fokussierung in der oben angegebenen durchgeführt werden kann.. Das erfindungsgemäße System kann z. B. in einer Ausführungform eine Anzeigeeinheit aufweisen, auf der das Übersichtsbild angezeigt wird. Femer kann das System in einer Ausführungform die Übersichtsaufnahme auch einem separaten Anzeigesystem, das nicht Teil des Inspektionssystems ist, zur Anzeige zur Verfügung stellen.

Insbesondere kann das Mikroskopobjektiv des erfindungsgemäßen Systems an einem Objektivhalter des Mikroskops angebracht sein und mittels des Objektivhalters in Arbeitsstellung gebracht werden.

Als Objektivhalter kann ein bekannter Objektivrevolver oder jeder andere Halter eingesetzt werden, der ein Objektiv oder mehrere Objektive haltem und in Arbeitsstellung bringen kann.

Es ist jedoch auch möglich, daß nicht das Mikroskopobjektiv, sondern die diesem nachgeordnete Beobachtungsoptik (bzw. zumindest ein Teil davon) austauschbar ausgebildet ist, um unterschiedliche Vergrößerungen zu realisieren. Dies kann so wie bei Mikroskopen (bzw. Inspektionssystemen) für die Halbleiter-Industrie mit austauschbarer Beobachtungsoptik (bzw. zumindest ein Teil davon) realisiert werden. Insbesondere kann das erfindungsgemäße System zur Masken- und Waferinspektion, Kontrolle/Inspektion von Bauelementen und Schichten/Schichtsystemen eingesetzt werden.

Bei einem erfindungsgemäßen Verfahren zur Untersuchung einer Probe mit einem ein Mikroskopobjektiv aufweisenden Mikroskop werden die Schnitte von Anspruch 16 durchgeführt.

Bei dem erfindungsgemäßen Verfahren können somit gleichzeitig und unabhängig voneinander ein Übersichtsbild von der Probe mittels der Videokamera und ein Meßbild der im Gesichtsfeld angeordneten Probe bzw. Probenabschnitts mittels des Mikroskops, das das Mikroskopobjektiv umfaßt, aufgenommen werden. Dies vereinfacht einerseits den Aufbau des Mikroskops und andererseits kann die Probe schneller positioniert und untersucht werden, da kein mechanisches Umschalten im Mikroskop oder ein Wechsel des Mikroskopobjektivs notwendig ist.

Insbesondere können das Übersichtsbild und das Meßbild nebeneinander oder auch als kombiniertes Bild auf einer Ausgabeeinheit (z. B. Bildschirm) des Mikroskops dargestellt werden, wodurch die Untersuchung mehr Informationen liefert.

Bei dem erfindungsgemäßen Verfahren kann die Positionierung der Probe in geregelter Weise erfolgen. So kann nach einer ersten Aufnahme mit der Videokamera eine erste Positionierung der Probe folgen. Danach wird die Probe nochmals aufgenommen und anhand dieser zweiten Aufnahme wird (z. B. automatisch) beurteilt, ob die Probe in der gewünschten Weise positioniert ist. Wenn das nicht der Fall ist, wird die Positionierung der Probe nochmals verändert. Dies wird solange durchgeführt, bis mittels der Aufnahme der Videokamera festgestellt ist, daß die Probe in gewünschter Weise positioniert ist.

Besonders vorteilhaft ist das erfindungsgemäße Verfahren bei der Untersuchung von integrierten optischen, mechanischen und/oder elektronischen Einrichtungen bzw. Schaltungen sowie der Untersuchung von Proben der Halbleiterindustrie einzusetzen, z. B. zur Inspektion von Wafern, Masken, integrierten Schaltungen oder auch bei Schichtuntersuchungen.

Erfindungsgemäß wird die Aufnahme der Videokamera so durchgeführt werden, daß die Aufnahme einen Bereich der Probe (oder auch die ganze Probe) aufweist, der mehr als den über das Mikroskopobjektiv erfaßbaren Probenbereich umfaßt. Die Aufnahme der Videokamera stellt dann ein Übersichtsbild dar, das sehr gut geeignet ist, um die Probe für das Mikroskop zu positionieren (z. B. Anfahren einer vorbestimmten Position der Probe).

Die Positionierung der Probe kann durch Bewegung der Probe relativ zum Mikroskop (z. B. mittels eines herkömmlichen Mikroskoptisches), des Mikroskops relativ zur Probe oder von sowohl dem Mikroskop als auch Probe durchgeführt werden.

Insbesondere kann bei dem erfindungsgemäßen Verfahren vor der Durchführung der Untersuchung in Abhängigkeit der Auswertung der Abstand zwischen der Probe und des Mikroskopobjektivs so eingestellt werden, daß das Mikroskop auf die Probe fokussiert ist. In diesem Fall ist es z. B. möglich, zuerst eine Fokussierung durchzuführen, um danach durch nochmalige Aufnahme der Probe eine sehr scharfe Aufnahme zu erzeugen, anhand der eine sehr genaue Probenpositionierung durchgeführt werden kann. Der Abstand kann auch so eingestellt werden, daß sich eine vorbestimmte Defokussierung ergibt. Dies ist beispielsweise bei der Fehleranalyse von Defekten bei integrierten Schaltungen von Vorteil.

Das bei dem erfindungsgemäßen Verfahren eingesetzte System kann dem erfindungsgemäßen System entsprechen und auch gemäß deren Weiterbildungen weitergebildet werden.

Insbesondere kann das erfindungsgemäße System eine Anzeigeeinheit aufweisen, auf der z. B. die Aufnahme der Videokamera und/oder die Mikroskopaufnahme dargestellt werden kann. Auch können die Bilddaten dieser Aufnahmen separaten Anzeigesystemen zur Verfügung gestellt werden.

Die Erfindung wird beispielshalber anhand der Zeichnungen noch näher erläutert. Es zeigen:
- Fig. 1: eine schematische Ansicht einer Mikroskopobjektivanordnung;
- Fig. 2: eine schematische Ansicht einer Weiterbildung der in Fig. 1 gezeigten Mikroskopobjektivanordnung;
- Fig. 3: eine schematische Ansicht einer weiteren Mikroskopobjektivanordnung;
- Fig. 4: eine schematische Ansicht einer Mikroskopobjektivanordnung mit zwei Videokameras, und
- Fig. 5: eine schematische Ansicht einer Mikroskopobjektivanordnung, bei der die Videokamera ein Umlenkelement aufweist.

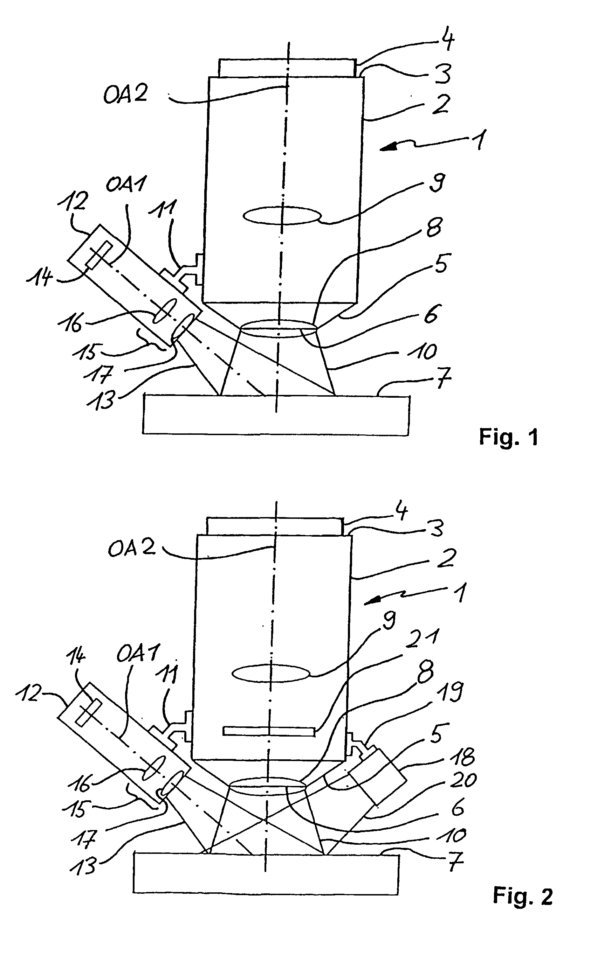

Die in Fig. 1 gezeigte Mikroskopobjektivanordnung umfaßt ein Mikroskopobjektiv 1 mit einem Gehäuse 2, an dessen Oberseite 3 ein Anschraubgewinde 4 vorgesehen ist, mit dem das Mikroskopobjektiv 1 an einen Objektivrevolver (nicht gezeigt) eines Mikroskops (nicht gezeigt) angeschraubt werden kann.

In der der Oberseite abgewandten Unterseite 5 des Gehäuses 2 ist eine Lichteintrittsöffnung 6 gebildet, durch die das von einer Probe 7 kommende Licht in das Gehäuse 2 eintreten kann, wobei die Optik des Mikroskopobjektivs 1 durch zwei schematisch eingezeichnete Linsen 8 und 9 angedeutet ist.

Mit dem Mikroskopobjektiv 1 kann von der Probe 7, wenn das Mikroskopobjektiv 1 in seiner Arbeitsstellung ist, wie in Fig. 1 gezeigt ist, ein vorbestimmter Bereich erfaßt werden, der mittels des eingezeichneten Strahlenkegels 10 angedeutet ist. Dieser Bereich, den das Mikroskopobjektiv 1 erfaßt, wird das Gesichtsfeld des Mikroskopobjektivs 1 genannt.

Ferner ist am Gehäuse 2 des Mikroskopobjektivs 1 über einen Halter 11 eine Videokamera 12 befestigt, deren optische Achse OA1 gegenüber der optischen Achse OA2 des Mikroskopobjektivs geneigt ist, so daß die Videokamera von der Seite schräg auf das Gesichtsfeld des Mikroskopobjektivs 1 blickt, wie dies durch den beispielhaft eingezeichneten Strahlenkegel 13 verdeutlicht ist.

Die Videokamera 12 umfaßt ein Bilderfassungselement 14, das in dem hier gezeigten Ausführungsbeispiel ein CCD-Element ist, und eine dem Bilderfassungselement 14 vorgeschaltete Abbildungsoptik 15, die durch zwei eingezeichnete Linsen 16, 17 schematisch dargestellt ist.

Eine für die Videokamera 12 notwendige Auswerteelektronik (nicht gezeigt) kann in der Videokamera integriert, mit dem Gehäuse 2 verbunden oder auch separat vorgesehen sein.

Bei der in Fig. 1 Mikroskopanordnung erfaßt die Videokamera 12 das gesamte Gesichtsfeld des Mikroskopobjektivs 1. Die Videokamera 12 der Mikroskopanordnung des erfindungsgemäßen Systems ist so ausgebildet daß sie mehr als das Gesichtsfeld des Mikroskopobjektivs 1 darstellt.

Mit der in Fig. 1 gezeigten Mikroskopobjektivanordnung ist es möglich, ein Bild (beispielsweise ein Übersichtsbild) der zu untersuchenden Probe 7 mittels der Videokamera 12 laufend zu erzeugen, so daß die Positionierung der Probe für die Untersuchung mit dem Mikroskopobjektiv 1 leicht möglich ist. Auch kann das Bild der Videokamera 12 bekannterweise dazu verwendet werden, um eine Fokussierung durchzuführen, wobei dazu der Abstand des Mikroskopobjektivs 1 zu der Probe 7 verändert wird. Eine solche Anordnung ist aus der Druckschrift DE3735091 bekannt, die den Oberbegriff der unabhängigen Ansprüche offenbart. Die Veränderung des Abstands (bzw. des Arbeitsabstands) erfolgt entweder durch Bewegung des Mikroskopobjektivs 1 entlang seiner optischen Achse OA2 oder durch Bewegung der Probe 7 (z.B. mittels eines nicht gezeigten Probentisches des Mikroskops, auf dem die Probe 7 liegt) entlang der optischen Achse OA2. In beiden Fällen ändert sich dabei aufgrund der mechanischen Kopplung mittels des Halters 11 auch entsprechend der Abstand zwischen Probe 7 und Videokamera 12.

Für eine solche Fokussierung kann beispielsweise mittels einer Laserdiode (nicht gezeigt) ein kleiner Lichtfleck auf der Probe 7 im Gesichtsfeld erzeugt werden, der durch die Videokamera 12 erfaßt wird, wobei aufgrund der Position des Lichtflecks im erfaßten Bild der Abstand von der Probe 7 zum Mikroskopobjektiv 1 bestimmbar und somit auf den für die Fokussierung gewünschten Wert einstellbar ist.

Auch ist es möglich die Videokamera 12 so relativ zum Gehäuse 2 auszurichten, daß dann ein scharfes Bild mit der Videokamera 12 erfaßt wird, wenn der Arbeitsabstand des Mikroskopobjektivs 1 optimal eingestellt ist und somit eine genaue Untersuchung der Probe 7 mittels des Mikroskopobjektivs 1 und der dieser nachgeordneten Optik des Mikroskops (nicht gezeigt) durchführbar ist.

Besonders vorteilhaft ist die Videokamera 12 gemäß der Scheimpflug-Bedingung so ausgebildet, daß sich die Ebene des Bilderfassungselements 14, die Hauptebene der Abbildungsoptik und die Ebene der aufzunehmenden Probenoberfläche in einer gemeinsamen Geraden schneiden, so daß trotz des schrägen Blickwinkels der Videokamera 12 ein flächig scharfes Bild mit der Videokamera 12 erhalten werden kann. Damit wird die Fokussierung vereinfacht und es kann auch noch ein qualitativ sehr gutes Übersichtsbild erzeugt werden.

Falls das Umgebungslicht zur Beleuchtung der Probe 7 für die Videokamera 12 nicht ausreicht, kann die übliche Mikroskopbeleuchtung eingesetzt werden. So ist eine Durchlicht- oder Auflichtbeleuchtung oder sogar eine Dunkelfeldbeleuchtung möglich.

In Fig. 2 ist eine Weiterbildung der in Fig. 1 gezeigten Mikroskopobjektivanordnung dargestellt, wobei gleiche Elemente mit gleichen Bezugszeichen bezeichnet sind und zu deren Beschreibung auf die obige Beschreibung zu Fig. 1 verwiesen wird. Zusätzlich ist bei der in Fig. 2 gezeigten Mikroskopobjektivanordnung noch eine Lichtquelle 18 über einen Halter 19 am Gehäuse 2 befestigt, wobei die Lichtquelle 18 so ausgelegt ist, daß sie den gesamten Probenbereich ausleuchtet, den die Videokamera 12 erfaßt, wie durch den beispielhaft eingezeichneten Strahlenverlauf 20 angedeutet ist.

Weiterhin ist im Mikroskopobjektiv 1 noch ein Sperrfilter 21 angeordnet, der entsprechend der Wellenlänge bzw. des Wellenlängenbereiches des von der Lichtquelle 18 abgegebenen Lichts ausgelegt ist und dieses abblockt, so daß es nicht in den dem Mikroskopobjektiv 1 folgenden Strahlengang gelangt. Dadurch wird vorteilhaft eine Beeinflussung oder auch Verschlechterung der mikroskopischen Untersuchung aufgrund des Beleuchtungslichts für die Videokamera 12 effektiv verhindert.

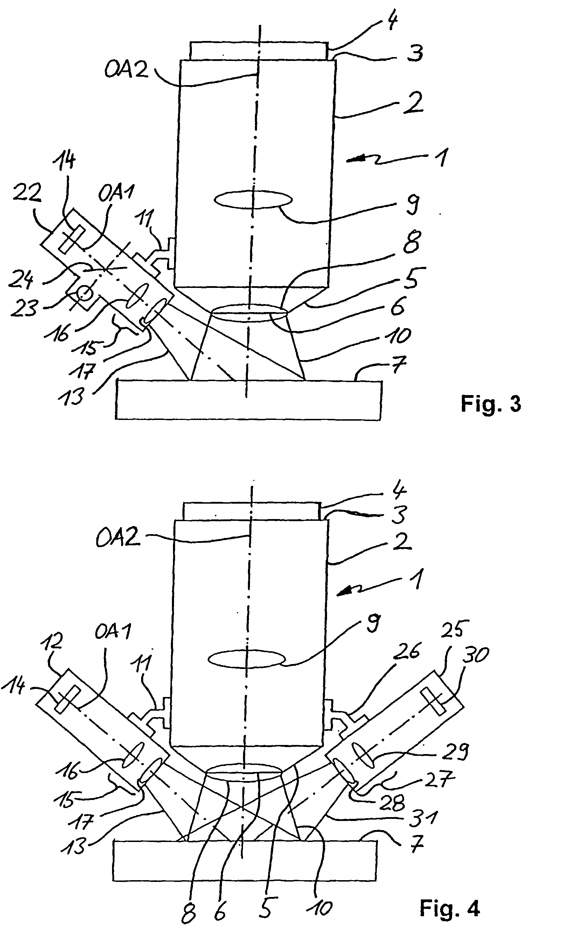

In Fig. 3 ist eine weitere Mikroskopobjektivanordnung gezeigt, bei der die am Gehäuse 2 befestigte Videokamera 22 gleich eine integrierte Lichtquelle 23 aufweist, deren Licht über einen halbdurchlässigen Spiegel 24 in den Strahlengang der Videokamera 22 eingekoppelt werden kann, so daß die Abbildungsoptik 15 auch noch als Beleuchtungsoptik genutzt wird. Dadurch wird in vorteilhafter Weise sichergestellt, daß der gesamte Beobachtungsbereich der Videokamera 22 ausgeleuchtet wird. Auch ist diese Anordnung äußerst kompakt und benötigt keine extra vorzusehende und an dem Gehäuse 2 des Mikroskopobjektivs 1 anzubringende Lichtquelle.

Bei der in Fig. 4 Mikroskopobjektivanordnung ist zusätzlich zu der Anordnung von Fig. 1 noch eine zweite Videokamera 25 über einen Halter 26 am Gehäuse 2 befestigt. Die zweite Videokamera 25 ist prinzipiell in gleicher Weise wie die erste Videokamera 12 aufgebaut und weist eine Abbildungsoptik 27, die in Fig. 4 durch die Linsen 28 und 29 angedeutet ist, und ein der Abbildungsoptik 27 nachgeordnetes Bilderfassungselement 30, das beispielsweise ein CCD-Sensor sein kann, auf. Der von der zweiten Videokamera 25 erfaßbare Bildbereich ist durch den Strahlenkegel 31 angedeutet.

Durch das Vorsehen der zweiten Videokamera 25 kann die Fokussierung durch Korrelation der durch beide Videokameras 12, 25 aufgenommenen Bilder leicht und schnell durchgeführt werden. Insbesondere ist es auch möglich, daß die durch die Abbildungsoptiken 15 und 27 bestimmten optischen Vergrößerungen für beide Videokameras 12, 25 gleich oder unterschiedlich groß gewählt sind, so daß im letzten Fall die Probenpositionierung besonders schnell durchführbar ist, da für den Bediener zwei Übersichtsbilder mit unterschiedlicher Vergrößerung vorliegen, wodurch ihm die Orientierung auf der Probe erleichtert wird.

Die zweite Videokamera 25 kann in gleicher Weise wie die Videokamera 12 gemäß der Scheimpflug-Bedingung ausgebildet sein, so daß auch mit der zweiten Videokamera 25 ein flächig scharfes Bild aufnehmbar ist.

Natürlich kann auch bei der in Fig. 4 gezeigten Ausführungsform noch eine zusätzliche Lichtquelle (wie z.B. in Fig. 2 gezeigt ist) vorgesehen sein. Ferner ist es möglich, die vorhandene Mikroskopbeleuchtung einzusetzen. Auch kann man die erste und/oder die zweite Videokamera 12, 25 durch eine Videokamera mit eigener Lichtquelle, wie beispielsweise in Fig. 3 gezeigt ist, ersetzen.

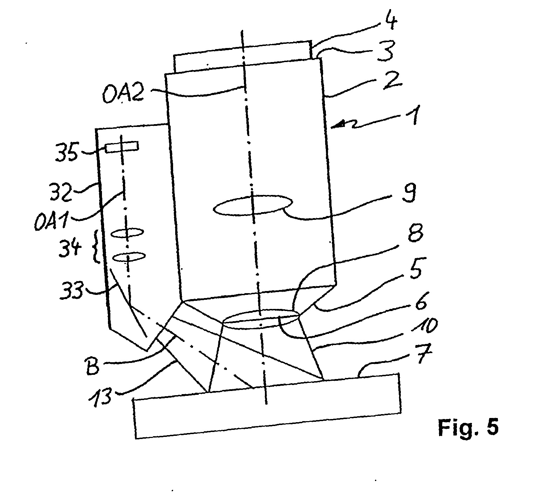

In Fig. 5 ist eine weitere Mikroskopobjektivanordnung gezeigt, bei der die Beobachtungsrichtung B der am Gehäuse 2 befestigten Videokamera 32 nicht mit der optischen Achse OA1 der Videokamera 32 zusammenfällt, sondern aufgrund des vorgesehenen Umlenkelements 33 (Spiegel) einen Winkel mit dieser einschließt. Des weiteren umfaßt die Videokamera 32 noch eine dem Umlenkelement 33 vorgeschaltete Abbildungsoptik 34 und ein dieser vorgeschaltetes Bilderfassungselement 35, das beispielsweise ein CCD-Sensor sein kann.

Wie aus Fig. 5 ersichtlich ist, kann aufgrund des Umlenkelements 33 die optische Achse OA1 der Videokamera 32 parallel zur optischen Achse OA2 des Mikroskopobjektivs 1 verlaufen, wodurch insbesondere die Abmessung quer zur optischen Achse OA2 des Mikroskopobjektivs 1 verringert werden kann, ohne daß der von der Videokamera 32 einsehbare Probenbereich verringert wird.

Auch bei dieser Anordnung kann die Beleuchtung für die Videokamera 32 durch die Mikroskopbeleuchtung erfolgen. Alternativ kann auch eine eigene Lichtquelle vorgesehen werden, die entweder separat am Gehäuse 2 angebracht werden oder auch in der Videokamera 32 integriert vorgesehen sein kann.

Die in Verbindung mit den Figuren beschriebenen Mikroskopobjektivanordnungen können jeweils bei einem herkömmlichen Licht-, insbesondere IR- oder UV-Licht-Mikroskop mit einer Beobachtungsoptik eingesetzt werden. Dabei ist dann das Mikroskopobjektiv der Mikroskopanordnung in seiner Arbeitsstellung der Beobachtungsoptik vorgeordnet und leitet aus dem Gesichtsfeld kommende Strahlung (kommendes Licht) in die Beobachtungsoptik weiter, so daß das Mikroskop normal betrieben werden kann. Die Kombination der Mikroskopobjektivanordnung mit dem Mikroskop führt zu einem erfindungsgemäßen Inspektions- bzw. Untersuchungssystem, bei dem in vorteilhafter Weise z. B. die Beobachtungsoptik vereinfacht sein kann.

Erfindungsgemäß wird mittels der Videokamera eine Übersichtsaufnahme der Probe aufgenommen und die Aufnahme wird. dann in einem Steuermodul des Inspektionssystems ausgewertet. In Abhängigkeit der Auswertung wird die Probe automatisch im Gesichtsfeld des Mikroskopobjektivs in gewünschter Weise positioniert und gegebenenfalls wird eine automatische Fokussierung durchgeführt.

Altemativ können die beschriebenen Mikroskopobjektivanordnungen auch bei die Probe (bevorzugt zumindest teilweise seriell) abtastenden Mikroskopen eingesetzt werden. Solche Mikroskope sind beispielsweise ein Laser Scanning Mikroskop (LSM) oder ein Confocal (bzw. konfokal) Scanning Mikroskop (CSM). Bei solchen Mikroskopen führt der Einsatz der erfindungsgemäßen Mikroskopobjektivanordnung insbesondere zu einer schnelleren Messung, da mittels der Videokamera in der beschriebenen Art ein Übersichtsbild aufgenommen werden kann, anhand dem die Positionierung und gegebenenfalls die Fokussierung durchgeführt wird. Die Aufnahme mit der Videokamera kann man sehr viel schneller durchführen im Vergleich zur Mikroskopaufnahme mittels der Abtastung, so daß sich die kürzere Gesamtmeßzeit ergibt (gegebenenfalls die Fokussierung und die Positionierung zusammen mit der abtastenden Messung).

## Patentansprüche

1. System zur Untersuchung einer Probe, mit einem ein Mikroskopobjektiv (1) aufweisenden Mikroskop, einer mit dem Mikroskopobjektiv (1) gekoppelten Videokamera (12; 22; 25; 32), mit der ohne Zwischenschaltung des Mikroskopobjektivs (1) eine im Gesichtsfeld des Mikroskopobjektivs (1) angeordnete Probe (7) aufnehmbar ist, sowie mit einem Steuermodul, das eine Aufnahme der Videokamera (12; 22; 25; 32) auswertet, **dadurch gekennzeichnet, daß** die Videokamera (12;22;25; 32) derart ausgebildet ist, daß die mittels der Videokamera (12; 22; 25; 32) aufgenommene Aufnahme ein Übersichtsbild der Probe (7) ist, das einen Bereich der Probe (7) enthält, der mehr als den über das Mikroskopobjektiv (1) erfaßbaren Probenbereich umfaßt, und daß das Steuermodul in Abhängigkeit des Auswerteergebnisses eine Positionierung der Probe (7) im Gesichtsfeld des Mikroskopobjektivs (1) bewirkt.

2. System nach Anspruch 1, **dadurch gekennzeichnet, daß** die Videokamera derart mit dem Mikroskopobjektiv (1) gekoppelt ist, daß in Arbeitsstellung des Mikroskopobjektivs (1) die räumliche Anordnung der Videokamera (12; 22; 25; 32) relativ zum Mikroskopobjektiv (1) bekannt bzw. fixiert ist.

3. System nach Anspruch 1 oder 2, **dadurch gekennzeichnet, daß** in Arbeitsstellung des Mikroskopobjektivs (1) die räumliche Anordnung der Videokamera (12; 22; 25; 32) relativ zum Mikroskopobjektiv (1) so gewählt ist, daß die Fokusebene der Videokamera (12; 22; 25; 32) mit der Fokusebene des Mikroskops zusammenfällt oder daß die Fokusebene der Videokamera eine vorbestimmte Lage zur Fokusebene des Mikroskops aufweist.

4. System nach einem der Ansprüche 1 bis 3, **dadurch gekennzeichnet, daß** die Videokamera (12; 22; 25; 32) mechanisch mit dem Mikroskopobjektiv (1) gekoppelt ist.

5. System nach einem der Ansprüche 1 bis 4, **dadurch gekennzeichnet, daß** die Beobachtungsrichtung (B) der Videokamera (12; 22; 25; 32) gegenüber der optischen Achse (OA2) des Mikroskopobjektivs (1) geneigt ist.

6. System nach Anspruch 5, **dadurch gekennzeichnet, daß** die Videokamera (12; 22; 25; 32) ein Umlenkelement (33) umfaßt.

7. System nach einem der Ansprüche 1 bis 6, **dadurch gekennzeichnet, daß** die Videokamera (12; 22; 25; 32) eine Abbildungsoptik (15; 27; 34) und ein dieser nachgeordnetes Bilderfassungselement (14; 30; 35) umfaßt.

8. System nach Anspruch 7, **dadurch gekennzeichnet, daß** eine Lichtquelle (18) vorgesehen ist, die zumindest einen Teil der Abbildungsoptik (15) als Beleuchtungsoptik nutzt.

9. System nach einem der Ansprüche 1 bis 8, **dadurch gekennzeichnet, daß** eine mechanisch mit dem Mikroskopobjektiv gekoppelte Lichtquelle (18; 23) für die Videokamera (12; 22) vorgesehen ist.

10. System nach Anspruch 8 oder 9, **dadurch gekennzeichnet, daß** im optischen Strahlengang des Mikroskops ein Sperrfilter (21) für die Strahlung der Lichtquelle (18) angeordnet ist.

11. System nach einem der Ansprüche 1 bis 10, **dadurch gekennzeichnet, daß** das Mikroskopobjektiv (1) ein Gehäuse (2) aufweist, an dessen Außenseite die Videokamera (12; 22; 25; 32) mechanisch befestigt ist.

12. System nach einem der Ansprüche 1 bis 11, **dadurch gekennzeichnet, daß** eine zweite Videokamera (25) mit dem Mikroskopobjektiv (1) gekoppelt ist, die ohne Zwischenschaltung des Mikroskopobjektivs (1) zumindest einen Teil des Gesichtsfelds erfassen kann, wenn sich das Mikroskopobjektiv (1) in Arbeitstellung befindet.

13. System nach Anspruch 12, **dadurch gekennzeichnet, daß** sich die von beiden Videokameras (12; 22; 25; 32) erfaßbaren Gesichtsfeldteile zumindest teilweise überlappen.

14. System nach Anspruch 12 oder 13, **dadurch gekennzeichnet, daß** die beiden Videokameras (12; 22; 25; 32) unterschiedliche optische Vergrößerungen aufweisen.

15. System nach einem der vorhergehenden Ansprüche, **dadurch gekennzeichnet, daß** das Mikroskop eine Beobachtungsoptik umfaßt, wobei in Arbeitsstellung das Mikroskopobjektiv (1) der Beobachtungsoptik vorgeordnet ist und aus dem Gesichtsfeld kommende Strahlung in die Beobachtungsoptik einkoppelt.

16. Verfahren zur Untersuchung einer Probe mit einem ein Mikroskopobjektiv aufweisenden Mikroskop, bei dem die zu untersuchende Probe, die im Gesichtsfeld des Mikroskopobjektives angeordnet ist, mit einer mit dem Mikroskopobjektiv gekoppelten Videokamera ohne Zwischenschaltung des Mikroskopobjektivs aufgenommen wird und die Aufnahme der Videokamera ausgewertet wird, **dadurch gekennzeichnet, daß** die Aufnahme mit der Videokamera so durchgeführt wird, daß die Aufnahme ein Übersichtsbild der Probe ist, das einen Bereich der Probe enthält, der mehr als den über das Mikroskopobjektiv erfaßbaren Probenbereich umfaßt, und daß in Abhängigkeit der Auswertung die Probe im Gesichtsfeld des Mikroskopobjektivs positioniert und danach die Untersuchung durchgeführt wird.

17. Verfahren nach Anspruch 16, bei dem die Probe derart positioniert wird, daß eine vorbestimmte Position der Probe untersucht werden kann.

18. Verfahren nach Anspruch 16 oder 17, bei dem vor der Durchführung der Untersuchung in Abhängigkeit der Auswertung der Abstand zwischen der Probe und dem Mikroskopobjektiv so eingestellt wird, daß das Mikroskop auf die Probe fokussiert ist bzw. eine vorbestimmte Defokussierung aufweist.

## Claims

1. A system for examining a sample, said system comprising a microscope having a microscope objective (1); a video camera (12; 22; 25; 32) coupled with the microscope objective (1), using which video camera (12; 22; 25; 32) a sample (7) arranged in the visual field of the microscope objective (1) can be recorded without interposition of the microscope objective (1); as well as comprising a control module which evaluates an image recorded by the video camera (12; 22; 25; 32), **characterised in that** the video camera (12; 22; 25; 32) is provided such that the image recorded by means of the video camera (12; 22; 25; 32) is a photomacrograph of the sample (7), said photomacrograph including an area of the sample (7) which comprises more than the sample area that can be covered via the microscope objective (1), and **in that** the control module effects positioning of the sample (7) within the visual field of the microscope objective (1) as a function of the result of evaluation.

2. System according to claim 1, **characterised in that** the video camera is coupled with the microscope objective (1) such that the spatial arrangement of the video camera (12; 22; 25; 32) relative to the microscope objective (1) is known or fixed when the microscope objective (1) is in its working position.

3. System according to claim 1 or 2, **characterised in that** the spatial arrangement of the video camera (12; 22; 25; 32) relative to the microscope objective (1), when the microscope objective (1) is in its working position, is selected such that the focal plane of the video camera (12; 22; 25; 32) coincides with the focal plane of the microscope, or that the focal plane of the video camera has a predetermined position relative to the focal plane of the microscope.

4. System according to any one of claims 1 to 3, **characterised in that** the video camera (12; 22; 25; 32) is mechanically coupled with the microscope objective (1).

5. System according to any one of claims 1 to 4, **characterised in that** the viewing direction (B) of the video camera (12; 22; 25; 32) is inclined relative to the optical axis (OA2) of the microscope objective (1).

6. System according to claim 5, **characterised in that** the video camera (12; 22; 25; 32) comprises a deflecting element (33).

7. System according to any one of claims 1 to 6, **characterised in that** the video camera (12; 22; 25; 32) comprises imaging optics (15; 27; 34) and an image-detecting element (14; 30; 35) arranged following said imaging optics (15; 27; 34).

8. System according to claim 7, **characterised in that** a light source (18) is provided, which uses at least part of the imaging optics (15) as illumination optics.

9. System according to any one of claims 1 to 8, **characterised in that** a light source (18; 23), which is mechanically coupled with the microscope objective, is provided for the video camera (12; 22).

10. System according to claim 8 or 9, **characterised in that** a blocking filter (21) for the radiation from the light source (18) is arranged in the optical path of the microscope.

11. System according to any one of claims 1 to 10, **characterised in that** the microscope objective (1) comprises a housing (2), on the outside of which the video camera (12; 22; 25; 32) is mechanically mounted.

12. System according to any one of claims 1 to 11, **characterised in that** a second video camera (25) is coupled with the microscope objective (1), which can detect at least part of the visual field, without interposition of the microscope objective (1), when the microscope objective (1) is in its working position.

13. System according to claim 12, **characterised in that** the parts of the visual field which can be detected by both video cameras (12; 22; 25; 32) overlap at least partially.

14. System according to claim 12 or 13, **characterised in that** both video cameras (12; 22; 25; 32) have different optical magnifications.

15. System according to any one of the preceding claims, **characterised in that** the microscope comprises observation optics, wherein the microscope objective (1), in its working position, is arranged preceding the observation optics and couples radiation coming from the visual field into the observation optics.

16. A method of examining a sample using a microscope which comprises a microscope objective, wherein the sample to be examined, which is arranged in the visual field of the microscope objective, is recorded by a video camera coupled with the microscope objective without interposition of the microscope objective and the image recorded by the video camera is evaluated, **characterised in that** recording with the video camera is effected such that the recorded image is a photomacrograph of the sample, said photomacrograph including an area of the sample which comprises more than the sample area that can be covered via the microscope objective, and **in that** the the sample is positioned within the visual field of the microscope objective as a function of the evaluation, and then said examination is carried out.

17. Method according to claim 16, wherein the sample is positioned such that a predetermined position of the sample may be examined.

18. Method according to claim 16 or 17, wherein, prior to effecting said examination as a function of said evaluation, the distance between the sample and the microscope objective is adjusted such that the microscope is focussed on the sample or has a predetermined amount of defocussing.

## Revendications

1. Système d'examen d'un échantillon avec un microscope comportant un objectif de microscope (1), une caméra vidéo (12 ; 22 ; 25 ; 32) reliée à l'objectif de microscope (1), par laquelle un échantillon (7) disposé dans le champ visuel de l'objectif de microscope (1) peut être pris en vue sans interposition de l'objectif de microscope (1), et un module de commande évaluant une prise de vue de la caméra vidéo (12 ; 22 ; 25 ; 32), **caractérisé en ce que** la caméra vidéo (12 ; 22 ; 25 ; 32) est configurée de manière à ce que la prise de vue effectuée au moyen de la caméra vidéo (12 ; 22 ; 25 ; 32) soit une image d'ensemble de l'échantillon (7) incluant une région de l'échantillon (7) de grandeur supérieure à la région d'échantillon saisissable par l'objectif de microscope (1), et **en ce que** le module de commande active un positionnement de l'échantillon (7) dans le champ visuel de l'objectif de microscope (1) en fonction du résultat de l'évaluation.

2. Système selon la revendication 1, **caractérisé en ce que** la caméra vidéo est reliée à l'objectif de microscope (1) de telle manière que la disposition spatiale de la caméra vidéo (12 ; 22 ; 25 ; 32) relativement à l'objectif de microscope (1) soit connue ou fixée en position de travail de l'objectif de microscope (1).

3. Système selon la revendication 1 ou 2, **caractérisé en ce que** la disposition spatiale de la caméra vidéo (12 ; 22 ; 25 ; 32) relativement à l'objectif de microscope (1) en position de travail de l'objectif de microscope (1) est choisie de manière que le plan focal de la caméra vidéo (12 ; 22 ; 25 ; 32) coïncide avec le plan focal du microscope, ou que le plan focal de la caméra vidéo présente une position définie par rapport au plan focal du microscope.

4. Système selon l'une des revendications 1 à 3, **caractérisé en ce que** la caméra vidéo (12 ; 22 ; 25 ; 32) est mécaniquement couplée à l'objectif de microscope (1).

5. Système selon l'une des revendications 1 à 4, **caractérisé en ce que** la direction d'observation (B) de la caméra vidéo (12 ; 22 ; 25 ; 32) est inclinée par rapport à l'axe optique (OA2) de l'objectif de microscope (1).

6. Système selon la revendication 5, **caractérisé en ce que** la caméra vidéo (12 ; 22 ; 25 ; 32) comprend un élément de renvoi (33).

7. Système selon l'une des revendications 1 à 6, **caractérisé en ce que** la caméra vidéo (12 ; 22 ; 25 ; 32) comprend une optique d'imagerie (15 ; 27 ; 34) et un élément de saisie d'image (14 ; 30 ; 35) en aval de celle-ci.

8. Système selon la revendication 7, **caractérisé en ce qu'**une source lumineuse (18) est prévue, utilisant une partie au moins de l'optique d'imagerie (15) en tant qu'optique d'éclairage.

9. Système selon l'une des revendications 1 à 8, **caractérisé en ce qu'**une source lumineuse (18 ; 23) mécaniquement reliée à l'objectif de microscope (1) est prévue pour la caméra vidéo (12 ; 22).

10. Système selon la revendication 8 ou 9, **caractérisé en ce qu'**un filtre sélectif (21) pour le rayonnement de la source lumineuse (18) est prévu sur le parcours optique du microscope.

11. Système selon l'une des revendications 1 à 10, **caractérisé en ce que** l'objectif de microscope (1) présente un boîtier (2) sur la face extérieure duquel la caméra vidéo (12 ; 22 ; 25 ; 32) est mécaniquement fixée.

12. Système selon l'une des revendications 1 à 11, **caractérisé en ce qu'**une deuxième caméra vidéo (25) est reliée à l'objectif de microscope (1), capable de saisir une partie au moins du champ visuel sans interposition de l'objectif de microscope (1) quand l'objectif de microscope (1) se trouve en position de travail.

13. Système selon la revendication 12, **caractérisé en ce que** les parties de champ visuel saisissables par les deux caméras vidéo (12 ; 22 ; 25 ; 32) se chevauchent au moins partiellement.

14. Système selon la revendication 12 ou 13, **caractérisé en ce que** les deux caméras vidéo (12 ; 22 ; 25 ; 32) présentent des grossissements optiques différents.

15. Système selon l'une des revendications précédentes, **caractérisé en ce que** le microscope comprend une optique d'observation, l'objectif de microscope (1) étant en position de travail situé en amont de l'optique d'observation et couple le rayonnement provenant du champ visuel à l'optique d'observation.

16. Procédé d'examen d'un échantillon avec un microscope comportant un objectif de microscope, où l'échantillon à examiner disposé dans le champ visuel de l'objectif de microscope est pris en vue sans interposition de l'objectif de microscope et où la prise de vue de la caméra vidéo est évaluée, **caractérisé en ce que** la prise de vue est effectuée avec la caméra vidéo de manière que la prise de vue soit une image d'ensemble de l'échantillon incluant une région de l'échantillon de grandeur supérieure à la région d'échantillon saisissable par l'objectif de microscope, et **en ce que** l'échantillon soit positionné dans le champ visuel de l'objectif de microscope en fonction du résultat de l'évaluation avant qu'il soit procédé à l'examen.

17. Procédé selon la revendication 16, où l'échantillon est positionné de manière à permettre l'examen d'une position définie de l'échantillon.

18. Procédé selon la revendication 16 ou 17, dans lequel, avant qu'il soit procédé à l'examen, l'intervalle entre l'échantillon et l'objectif de microscope est réglé en fonction de l'évaluation de manière que le microscope soit focalisé sur l'échantillon ou présente une défocalisation définie.
